# EUROPEAN PATENT APPLICATION

(11) **EP 4 343 948 A1**
(43) Date of publication of application: **27.03.2024**
(21) Application number: 23807750.7
(22) Date of filing: 02.03.2023
(51) Int. Cl.: H01M 50/403, H01M 50/417, H01M 50/449, H01M 50/489, H01M 50/491

(54) **METHOD FOR MANUFACTURING SEPARATOR FOR LITHIUM SECONDARY BATTERY, SEPARATOR FOR LITHIUM SECONDARY BATTERY MANUFACTURED THEREFROM, AND LITHIUM SECONDARY BATTERY HAVING SAME**

(30) Priority: 19.05.2022 KR 20220061353
(71) Applicant: LG Energy Solution, Ltd., Seoul 07335 (KR)
(72) Inventor: JEONG, So-Mi, Daejeon 34122 (KR); LEE, So-Yeong, Daejeon 34122 (KR); BAE, Won-Sik, Daejeon 34122 (KR); BAE, Kyeong-Hui, Daejeon 34122 (KR)
(74) Representative: Hoffmann Eitle
(86) International application number: PCT/KR2023/002845
(87) International publication number: WO 2023/224225

(57) **Abstract**

The present disclosure provides a method for manufacturing a separator for a lithium secondary battery. The method includes a step (S1) of preparing a slurry in which binder polymer particles and inorganic particles are dispersed in an aqueous dispersion medium, and a step (S2) of forming a porous coating layer by applying and drying the slurry on at least one surface of a porous polyolefin polymer substrate having a plurality of pores, in which the porous polyolefin polymer substrate has a thickness of 9 µm or less, the porous polyolefin polymer substrate has an average pore diameter of 30 nm or less, and the binder polymer particles remain in an amount of 0.5 g/m² or less in the porous polyolefin polymer substrate after the porous coating layer is peeled off by a method of attaching and detaching 3M Scotch tape three times.

## Description

### Technical Field

The present disclosure claims the benefit of the filing date of Korean Patent Application No. 10-2022-0061353 filed with the Korean Intellectual Property Office on May 19, 2022, all of which are included in the present disclosure.

The present disclosure relates to a method for manufacturing a separator for a lithium secondary battery in which a porous coating layer including a binder polymer and inorganic particles is formed on the surface of a porous polyolefin polymer substrate, a separator for a lithium secondary battery prepared therefrom, and a lithium secondary battery having the same.

### Background Art

A porous substrate with multiple pores and based on polymers such as polyolefins is being used as a separator for lithium secondary batteries.

To enhance the heat resistance properties of these porous polymer substrates, a separator with a porous coating layer including binder polymers and inorganic particles on the surface of the polymer substrate has been developed.

In the above-described separator for a lithium-ion battery, the average pore diameter of the porous polymeric substrate may be adjusted according to the application. For example, a separator used in a lithium-ion battery for an electric vehicle has an average pore diameter of 40 to 80 nm of a porous polyolefin polymer substrate and is prepared by dispersing inorganic particles in a polymer solution in which a binder polymer is dissolved in a solvent to prepare a slurry, which is then coated on the surface of the porous polymer substrate and dried.

However, in order to realize high energy density, thinning of the separator is required, but when the thickness of the porous polymer substrate is reduced to 9 µm or less, there is a problem in that the insulation of the separator is lowered. To solve this problem, controlling the average pore diameter of the porous polymer substrate to, for example, 30 nm or less improves the insulating properties, but the binder polymer used to form the porous coating layer penetrates into the pores, further narrowing the pores, which are the passageways for lithium ions, and reducing the lifetime characteristics of the battery.

### Disclosure

### Technical Problem

An objective of the present disclosure is to provide a method for manufacturing a separator for a lithium secondary battery having a porous coating layer including a binder polymer and inorganic particles and a thin-film porous polymer substrate while improving the life characteristics of the battery.

Another objective of the present disclosure is to provide a separator for a lithium secondary battery having the above characteristics and a lithium secondary battery having the same.

It will be readily apparent that the objectives and advantages of the present disclosure may be realized by means or methods and combinations thereof recited in the claims.

### Technical Solution

The first aspect of the present disclosure is a method for manufacturing a separator for a lithium secondary battery, the method including: (S1) preparing a slurry including binder polymer particles and inorganic particles dispersed in an aqueous dispersion medium; and
(S2) forming a porous coating layer on at least one surface of a porous polyolefin polymer substrate having a plurality of pores by applying and drying the slurry on the at least one surface, in which
the porous polyolefin polymer substrate has a thickness of 9 µm or less,
the porous polyolefin polymer substrate has an average pore diameter of 30 nm or less, and
the binder polymer is present in an amount of 0.5 g/m² or less in the porous polyolefin polymer substrate after the porous coating layer is peeled off by a method of attaching and detaching 3M Scotch tape three times.

A second aspect of the present disclosure provides a method for manufacturing a separator for a lithium secondary battery, according to the first aspect, in which
the average pore diameter of the porous polyolefin polymer substrate is 27 nm or less, and
the binder polymer is present in an amount of 0.45 g/m² or less in the porous polyolefin polymer substrate after the porous coating layer is peeled off by a method of attaching and detaching 3M Scotch tape three times.

A third aspect of the present disclosure provides a method for manufacturing a separator for a lithium secondary battery, according to the first aspect, in which
the average pore diameter of the porous polyolefin polymer substrate is 25 nm or less, and
the binder polymer is present in an amount of 0.42 g/m² or less in the porous polyolefin polymer substrate after the porous coating layer is peeled off by a method of attaching and detaching 3M Scotch tape three times.

A fourth aspect of the present disclosure provides a method for manufacturing a separator for a lithium secondary battery, according to any one of the first to third aspects, in which
the slurry further includes a non-particulate binder polymer.

A fifth aspect of the present disclosure provides a method for manufacturing a separator for a lithium secondary battery, according to the fourth aspect, in which
the non-particulate binder polymer is 10% by weight or less based on the total weight of the binder polymer.

A sixth aspect of the present disclosure provides a method for manufacturing a separator for a lithium secondary battery, according to any one of the first to fifth aspects,
the binder polymer particles have an average particle diameter in a range of 50 to 1000 nm.

A seventh aspect of the present disclosure provides a method for manufacturing a separator for a lithium secondary battery, according to any one of the first to sixth aspects, in which
the binder polymer particles are made of one or more polymers selected from the group consisting of polyvinyl fluoride-based polymers, acrylic polymers, vinyl-based polymers, and rubber-based polymers.

The eighth aspect of the present disclosure provides a separator for a lithium secondary battery, the separator includes a porous coating layer, and
a porous polyolefin polymer substrate having a plurality of pores, in which
a porous coating layer formed on at least one surface of the porous polyolefin polymer substrate and containing a binder polymer and inorganic particles,
the porous polyolefin polymer substrate has a thickness of 9 µm or less,
the average pore diameter of the porous polyolefin polymer substrate is 30 nm or less,
the binder polymer includes a particulate binder polymer, and
the binder polymer is present in an amount of 0.5 g/m² or less in the porous polyolefin polymer substrate after the porous coating layer is peeled off by a method of attaching and detaching 3M Scotch tape three times.

A ninth aspect of the present disclosure provides a separator for a lithium secondary battery, according to the eighth aspect, in which
the average pore diameter of the porous polyolefin polymer substrate is 27 nm or less,
the binder polymer is present in an amount of 0.45 g/m² or less in the porous polyolefin polymer substrate after the porous coating layer is peeled off by a method of attaching and detaching 3M Scotch tape three times.

A tenth aspect of the present disclosure provides a separator for a lithium secondary battery, according to the eighth aspect, in which
the average pore diameter of the porous polyolefin polymer substrate is 25 nm or less,
the binder polymer is present in an amount of 0.42 g/m² or less in the porous polyolefin polymer substrate after the porous coating layer is peeled off by a method of attaching and detaching 3M Scotch tape three times.

An eleventh aspect of the present disclosure provides a separator for a lithium secondary battery, according to any one of the eighth to tenth aspects, in which
the binder polymer further includes a non-particulate binder polymer.

A twelfth aspect of the present disclosure provides a separator for a lithium secondary battery, according to the eleventh aspect, in which
the non-particulate binder polymer is an acrylic polymer having a Tg of 0°C or less.

A thirteenth aspect of the present disclosure provides a separator for a lithium secondary battery, according to any one of the eighth to twelfth aspects, in which
the non-particulate binder polymer is 10% by weight or less based on the total weight of the binder polymer.

A fourteenth aspect of the present disclosure provides a separator for a lithium secondary battery, according to any one of the eighth to thirteenth aspects, in which
the binder polymer particles have an average particle diameter in a range of 50 to 1000 nm.

A fifteenth aspect of the present disclosure provides a separator for a lithium secondary battery, according to any one of the eighth to fourteenth aspects, in which
the binder polymer particles are made of one or more polymers selected from the group consisting of polyvinyl fluoride-based polymers, acrylic polymers, vinyl-based polymers, and rubber-based polymers.

A sixteenth aspect of the present disclosure provides a separator for a lithium secondary battery, according to any one of the eighth to fifteenth aspects, in which
the binder polymer particles are acrylic polymer having a Tg of 20°C or higher.

A seventeenth aspect of the present disclosure provides a lithium secondary battery including an electrode assembly including a cathode, an anode, and a separator interposed between the cathode and anode, in which the separator is a separator according to any one of the eighth to sixteenth aspects.

### Advantageous Effects

The present disclosure is a method for manufacturing a separator having a porous polymer substrate and a porous coating layer containing a binder polymer and inorganic particles on the surface thereof. The thin-film porous polyolefin polymeric substrate having a small average pore diameter enables the realization of a high energy density while providing good insulation, and the pore-clogging phenomenon is improved by having a small average pore diameter, thereby improving the life characteristics of the battery.

Therefore, a separator manufactured by this manufacturing method is very useful as a separator of a lithium secondary battery.

### Mode for Invention

Hereinafter, the present disclosure will be described in detail. Prior to this, the terms or words used in the present specification and claims should not be construed as being limited to conventional or dictionary meanings, and the inventor should properly understand the concept of the term in order to best describe his disclosure. Based on the principle that it can be defined, it should be interpreted as meaning and concept consistent with the technical idea of the present disclosure. Therefore, since the configurations described in the embodiments described herein are only the most preferred embodiments of the present disclosure and do not represent all the technical ideas of the present disclosure, it should be understood that there may be various equivalents and modifications that may replace them at the time of the present application.

Throughout this specification, when a part "includes" a certain component, it means that other components may be further included, rather than excluding other components unless otherwise stated.

In the present specification, the characteristic of having pores means that a gaseous and/or liquid fluid can pass from one side of the object to the other side by a structure in which the object includes a plurality of pores and is interconnected between the pores.

In the present specification, the separator has a porous property including a plurality of pores and serves as a porous ion-conducting barrier to pass ions while blocking electrical contact between the anode and the cathode in an electrochemical device.

Hereinafter, a method for manufacturing a separator for a lithium secondary battery according to the present disclosure will be described in detail.

The method for manufacturing a separator for a lithium secondary battery of the present disclosure includes: (S1) preparing a slurry including binder polymer particles and inorganic particles dispersed in an aqueous dispersion medium; and (S2) forming a porous coating layer on at least one surface of a porous polyolefin polymer substrate having a plurality of pores by applying and drying the slurry on the at least one surface, in which
the porous polyolefin polymer substrate has a thickness of 9 µm or less,
the porous polyolefin polymer substrate has an average pore diameter of 30 nm or less,
the binder polymer is present in an amount of 0.5 g/m² or less in the porous polyolefin polymer substrate after the porous coating layer is peeled off by a method of attaching and detaching 3M Scotch tape three times.

In the present disclosure, as is well known, the porous polyolefin polymer substrate is prepared using polyolefin as a base polymer. Examples of polyolefin-based polymer include polyethylene, polypropylene, polypentene, and the like, and may include one or more thereof. Porous, i.e., polymer substrates having a large number of pores, prepared on the basis of such polyolefins are advantageous from the point of view of imparting a shutdown function at an appropriate temperature. In particular, the simultaneous inclusion of polyethylene and polypropylene as polyolefins can simultaneously improve properties such as shutdown properties and mechanical strength.

When preparing the polymer substrate, other polymer components may be further mixed as needed in addition to the above-described polyolefin-based polymer, and filler particles may be further included. Filler particles may be introduced for the purpose of a pressure barrier in order not to excessively decrease the thickness, pore size, and porosity of the separator substrate with respect to a high pressure applied in a lamination process. Filler particles may include an organic filler or an inorganic filler having a predetermined particle size and are not limited to a specific component as long as it has a strength greater than or equal to the polyolefin resin.

In the present disclosure, the thickness of the porous polyolefin polymer substrate is 9 µm or less, and the average pore diameter of the porous polyolefin polymer substrate is 30 nm or less. Since the porous polyolefin polymer substrate having a thickness of 9 µm or less is a thin film, it is possible to implement a lithium secondary battery having a high energy density, and when the average pore diameter is 30 nm or less, the insulation of the thin-film polymer substrate is well secured.

Specifically, the thickness of the porous polyolefin polymer substrate may be 8 µm or less, 7 µm or less, 6 µm or less, or 5 µm or less. However, the polyolefin polymer substrate may have a thickness of 4 µm or more to secure the insulation of the separator. Preferably, the thickness of the polyolefin polymer substrate may be at least 4 um and not more than 8 µm. More preferably, it may be 7 µm or more and 8 µm or less.

Specifically, the average pore diameter of the porous polyolefin polymer substrate is 29 nm or less, 28 nm or less, 27 nm or less, 26 nm or less, 25 nm or less, 24 nm or less, 23 nm or less, 22 nm or less, or 21 nm or less. However, in order to secure a path for lithium ion movement, the average pore diameter of the pores may be 20 nm or more. More preferably, the average pore diameter may be at least 20 nm and no more than 25 nm.

The average pore diameter can be calculated from the pore size distribution measured using the capillary flow porometer method. For example, at first, after wetting the separator to be measured with a wetting agent such as Galwick solution, the air pressure on one side of the substrate is gradually increased. At this time, when the applied air pressure is greater than the capillary attraction of the wetting agent existing in the pores, the wetting agent blocking the pores is pushed out, and the pore size and distribution are measured through the pressure and flow rate at the moment of pushing out, and the average pore diameter (size) can be determined from this.

The porous polyolefin polymer substrate described above may be prepared as follows but is not limited thereto.

In one embodiment of the present disclosure, the porous polyolefin polymer substrate may be prepared by a method (dry method) in which the polyolefin polymer is melt extruded, formed into sheets, and then stretched to cause micro-cracks between lamellae, which are crystalline portions of the polymer, to form micropores. Alternatively, the polymer film member may be prepared by kneading a polymer material with diluents at a high temperature to form a single phase, phase-separating the polymer material and plasticizer in a cooling process, and then extracting the plasticizer to form pores (wet method). At this time, the size of the pores can be controlled through the stretching temperature and the MD/TD stretching ratio.

When a filler is added, the size of the filler particle may be 0.001 um to less than 100 um. Preferably, the filler particle may have a particle size of 0.01 to 0.1 um and may be appropriately adjusted within the above range in consideration of the target thickness after the lamination process of the separator substrate.

According to the manufacturing method of the present disclosure, preparing a slurry comprising binder polymer particles and inorganic particles dispersed in an aqueous dispersion medium can be performed as follows (step S1).

Inorganic particles constituting the skeleton of the porous coating layer are not particularly limited as long as they are electrochemically stable. For example, the inorganic particles that can be used in the present disclosure are not particularly limited as long as oxidation and/or reduction reactions do not occur in the operating voltage range of the applied batteries (e.g., 0 to 5 V based on Li/Li⁺).

Examples of the above-described inorganic particles include high dielectric constant inorganic particles having a dielectric constant of 1 or more, preferably 10 or more, inorganic particles having piezoelectricity, inorganic particles having lithium ion transfer ability, and the like.

In other words, the inorganic particles include, but are not limited to, SrTiO₃, SnO₂, CeO₂, MgO, NiO, CaO, ZnO, ZrO₂, Y₂O₃, Al₂O₃, AlOOH, Al(OH)₃, TiO₂, SiC, and the like, which may be mixed with one or more of them.

In addition, piezoelectricity inorganic particles refer to materials that are insulators under normal pressure but have properties of conducting electricity due to internal structural changes when a certain pressure is applied. These piezoelectric inorganic particles have a high dielectric constant value of 100 or more. In addition, when a certain pressure is applied and stretched or compressed, charges are generated. As one side is positively charged and the other side is negatively charged, a potential difference is generated between the two sides. In the case of using such piezoelectric inorganic particles, when an internal short circuit of both electrodes occurs due to an external impact such as a local crush or nail, the piezoelectricity of the inorganic particles causes an intra-particle potential difference to occur, which results in electron movement between the two electrodes, i.e., a small current flow, thereby gentle reducing the voltage of the battery and improving safety. Examples of the inorganic particles having piezoelectricity may include BaTiO₃, Pb(Zr,Ti)O₃ (PZT), Pb₁₋ₓLaₓZr_{1-y}Ti_{y}O₃ (PLZT), Pb(Mg_{1/3}Nb_{2/3})O₃-PbTiO₃ (PMN-PT), hafnia (HfO₂), or a mixture thereof but is not limited thereto.

Inorganic particles having lithium ion transfer ability refer to inorganic particles that contain a lithium element but do not store lithium and have a function of moving lithium ions. Since inorganic particles having lithium ion transfer ability can transfer and move lithium ions due to a kind of defect existing inside the particle structure, lithium ion conductivity in the battery is improved, thereby improving battery performance. Examples of the inorganic particles having the lithium ion transport ability include lithium phosphate (Li₃PO₄), lithium titanium phosphate (LiₓTi_{y}(PO₄)₃, 0<x<2, 0<y<3), lithium aluminum titanium phosphate (LiₓAl_{y}Ti_{z})(PO₄)₃, 0<x<2, 0<y<1, 0<z<3), (LiAlTiP)ₓO_{y}-based glass (0<x<4, 0<y<13), such as 14Li₂O-9Al₂O₃-38TiO₂-39P₂O₅, lithium lanthanum titanate (LiₓLa_{y}TiO₃, 0<x<2, 0<y<3), lithium germanium thiophosphate (LiₓGe_{y}P_{z}S_{w}, 0<x<4, 0<y<1, 0<z<1, 0<w<5), such as Li_{3.25}Ge_{0.25}P_{0.75}S₄, etc., lithium nitride (LiₓN_{y}, 0<x<4, 0<y<2), such as Li₃N, SiS₂-based glass (LiₓSi_{y}S_{z}, 0<x<3, 0<y<2, 0<z<4), such as Li₃PO₄-Li₂S-SiS₂, P₂S₅-based glass (LiₓP_{y}S_{z}, 0<x<3, 0<y<3, 0<z<7), such as LiI-Li₂S-P₂S₅, etc., or a mixture thereof but is not limited thereto.

The particle size of the inorganic particles is not limited but is preferably in the range of 0.001 µm to 10 um for the formation of a porous coating layer of uniform thickness and proper porosity. The pore size of the porous coating layer can be controlled by adjusting the particle size of the inorganic particles used, the amount of binder polymer particles mixed in, and the content of the optionally included non-particulate binder polymer dissolved in the aqueous dispersion medium.

The binder polymer particles dispersed in the slurry provide adhesion of the porous coating layer to the polyolefin polymer substrate and the electrode while connecting and fixing the inorganic particles. Since the binder polymer particles do not dissolve in the aqueous dispersion medium and thus retain their particulate shape when added to the slurry, which shape is usually circular particles, but is not limited thereto. In the present disclosure, "particles" means particles that are insoluble in the dispersion medium in the slurry and remain in the particulate shape at temperatures of 20°C or less. Preferably at a temperature of 30°C or less, more preferably at a temperature of 35°C or less, the particulate shape is maintained.

These binder polymer particles maintain their particulate shape even after being assembled into a battery and hardly penetrate into the pores of the porous polyolefin polymer substrate, contributing to improving the pore-clogging phenomenon caused by the small average pore diameter of the polyolefin polymer substrate. In this respect, the binder polymer particles can be used having an average particle size of 50 to 1000 nm, but are not limited thereto.

The binder polymer particles can be used without limitation as long as they are capable of imparting adhesion to the electrode, for example, polymer particles including one or more polymers selected from the group consisting of polyvinyl fluoride-based polymers, acrylic polymers, vinyl-based polymers, and rubber-based polymers.

As the polyvinyl fluoride-based polymer, polyvinylidene fluoride or a copolymer thereof, and as the rubber-based polymer particle, styrene-butadiene rubber (SBR), acrylonitrile-butadiene rubber, acrylonitrile-butadiene-styrene rubber, etc., may be exemplified, and as the acrylic polymer particles, a copolymer of butyl acrylate and ethylhexyl acrylate, a copolymer of methyl methacrylate and ethylhexyl acrylate, etc., are mentioned.

In addition to this, polyacrylonitrile, polyvinylchloride, polycyanoacrylate, copolymers of vinylidene fluoride-hexafluoropropylene, etc., may be exemplified and are not limited thereto.

In particular, an acrylic polymer having a Tg of 20°C or more can be used as the binder polymer particles. More specifically an acrylic polymer having a Tg of 30°C or more, and even more specifically, an acrylic polymer having a Tg of 35°C or more may be used. In particular, an acrylic polymer having a Tg of 20°C to 100°C can be used, more particularly an acrylic polymer having a Tg of 30°C to 60°C, and even more particularly an acrylic polymer having a Tg of 35°C to 50°C may be used.

The aqueous dispersion medium is a hydrophilic liquid such as water or alcohol and is a dispersion medium that does not dissolve the inorganic particles and the binder polymer particles. The slurry is prepared by adding, mixing, and dispersing binder polymer particles and inorganic particles in an aqueous dispersion medium.

A dispersant may be further added to the slurry if necessary.

In addition, the slurry may further include a non-particulate binder polymer, in addition to the binder polymer particle, that is, the particulate -shape binder polymer. In this specification, "non-particulate shape" means a state that is soluble in an aqueous dispersion medium in an aqueous slurry or that is not soluble in an aqueous dispersion medium but loses its particulate shape with temperature, such as being converted to a film at temperatures of 18°C or more. Non-particulate shape preferably loses its particulate shape at temperatures of 15°C or more, more preferably at temperatures of 10°C or more.

Examples of the non-particulate binder polymer dissolved in the aqueous dispersion medium include polyvinyl alcohol, carboxymethyl cellulose, and the like, but are not limited thereto. Non-particulate binder polymers that are not dissolved in the aqueous dispersion medium but lose their particulate shape at a predetermined temperature include but are not limited to, acrylic polymers having a Tg of 0°C or less. The non-particulate binder polymer, which is not dissolved in the aqueous dispersion medium but loses the particulate shape at a predetermined temperature, has a non-particulate shape in the finally formed porous coating layer.

The content of the non-particulate binder polymer may be 10% by weight or less based on the total weight of the binder polymer. Specifically, the content of the non-particulate binder polymer may include 9% by weight or less, 8% by weight or less, 7% by weight or less, 6% by weight or less, or 5% by weight or less, based on the total weight of the binder polymer in the slurry. When the content of the non-particulate binder polymer exceeds 10% by weight, clogging of pores may occur.

The mixing ratio (weight ratio) of inorganic particles and binder polymer particles in the slurry is, for example, 50:50 to 99:1, and more specifically, but not limited to 60:40 to 99:1.

The prepared slurry is coated on at least one side of the porous polyolefin polymeric substrate and dried to form a porous coating layer (step S2). For the process of coating the slurry on the polymer substrate, a conventional coating method may be used. In particular, it is preferable to apply through dip coating, die coating, roll coating, comma coating, or a combination thereof. Furthermore, the drying method appropriately sets temperature and time conditions to minimize the occurrence of surface defects in the porous coating layer. The drying may be performed by a drying aid device such as a drying oven or hot air within an appropriate range.

In the manufacturing method of the present disclosure, the porous coating layer is formed such that the binder polymer is present in an amount of 0.5 g/m² or less in the porous polyolefin polymer substrate after the porous coating layer is peeled off by a method of attaching and detaching 3M Scotch tape three times.

When the amount of binder polymer component remaining in the porous polyolefin polymer substrate after peeling under the above peeling conditions exceeds 0.5 g/m², the life characteristics of the battery are degraded due to the phenomenon of pore blockage caused by having a small average pore diameter. In this aspect, more specifically, the average pore diameter of the porous polyolefin polymer substrate is 27 nm or less, and the binder polymer is present in an amount of 0.45 g/m² or less in the porous polyolefin polymer substrate after the porous coating layer is peeled off by a method of attaching and detaching 3M Scotch tape three times, and more specifically, the average pore diameter of the porous polyolefin polymeric substrate is 25 nm or less, and the binder polymer is present in an amount of 0.42 g/m² or less in the porous polyolefin polymer substrate after the porous coating layer is peeled off by a method of attaching and detaching 3M Scotch tape three times.

The separator for a lithium secondary battery prepared by the above method includes
a porous polyolefin polymer substrate having a plurality of pores, and
a porous coating layer formed on at least one surface of the porous polyolefin polymer substrate and containing a binder polymer and inorganic particles,
the porous polyolefin polymer substrate has a thickness of 9 µm or less,
the average pore diameter of the porous polyolefin polymer substrate is 30 nm or less,
the binder polymer includes a particulate binder polymer, and
in the porous coating layer, the binder polymer is present in an amount of 0.5 g/m² or less in the porous polyolefin polymer substrate after the porous coating layer is peeled off by a method of attaching and detaching 3M Scotch tape three times.

More specifically, the average pore diameter of the porous polyolefin polymer substrate is 27 nm or less, and the binder polymer is present in an amount of 0.45 g/m² or less in the porous polyolefin polymer substrate after the porous coating layer is peeled off by a method of attaching and detaching 3M Scotch tape three times, and more specifically, the average pore diameter of the porous polyolefin polymeric substrate is 25 nm or less, and the binder polymer is present in an amount of 0.42 g/m² or less in the porous polyolefin polymer substrate after the porous coating layer is peeled off by a method of attaching and detaching 3M Scotch tape three times.

As described above, the amount of the non-particulate binder polymer may be 10% by weight or less based on the total weight of the binder polymer. Further, the binder polymer particles may have an average particle diameter of 50 to 1000 nm. The binder polymer particles may be made of one or more polymers selected from the group consisting of polyvinyl fluoride-based polymers, acrylic polymers, vinyl-based polymers, and rubber-based polymers. The binder polymer particles may be an acrylic polymer having a Tg of 20°C or higher.

In one embodiment of the present disclosure, the porosity of the porous coating layer, i.e., the heat-resistant layer, may be from 30 vol% to 70 vol%. In addition, the thickness of the porous coating layer may be 0.5 to 3 µm based on single-sided coating but is not limited thereto.

The separator for a lithium secondary battery as described above, is interposed between a cathode and an anode and is manufactured into a lithium secondary battery by forming an electrode assembly together with the cathode and anode. That is, the separator for a lithium secondary battery manufactured by the above method is interposed between the anode and the cathode and is manufactured as an electrode assembly by a lamination process in which heat and/or pressure are applied to bind the separator. In one embodiment of the present disclosure, the lamination process may be performed by a roll press device including a pair of pressure rollers. That is, an anode, a separator, and a cathode are sequentially stacked and put between the pressure rollers to achieve interlayer bonding. In this case, the lamination process may be performed by a pressurizing method with heat.

The cathode includes a cathode current collector and a cathode active material layer, including a cathode active material, a conductive material, and a binder resin on at least one surface of the current collector. The cathode active material may include one or a mixture of two or more among layered compounds such as lithium manganese oxide (LiMn₂O₄, LiMnO₂, etc.), lithium cobalt oxide (LiCoO₂), lithium nickel oxide (LiNiO₂), or a compound substituted with one or more transition metals; lithium manganese oxides of the formula Li₁₊ₓMn₂₋ₓO₄ (where x is 0 to 0.33), LiMnO₃, LiMn₂O₃, LiMnO₂, and the like; lithium copper oxide (Li₂CuO₂); vanadium oxides such as LiV₃O₈, LiV₃O₄, V₂O₅, and Cu₂V₂O₇; Ni site-type lithium nickel oxide represented by the formula LiNi₁₋ₓMxO₂ (where M = Co, Mn, Al, Cu, Fe, Mg, B, or Ga, and x = 0.01 to 0.3); lithium manganese composite oxides represented by the formula LiMn₁₋ₓMₓO₂ (where M = Co, Ni, Fe, Cr, Zn, or Ta and x = 0.01 to 0.1) or Li₂Mn₃MO₈ (where M = Fe, Co, Ni, Cu, or Zn); LiMn₂O₄ in which a part of Li in the formula is substituted with an alkaline earth metal ion; disulfide compounds; Fe₂(MoO₄)₃.

The anode includes an anode current collector and an anode active material layer, including an anode active material, a conductive material, and a binder resin on at least one surface of the current collector. The anode may include, as an anode active material, at least one or a mixture of two or more selected from the group consisting of carbons such as lithium metal oxide, non-graphitized carbon, and graphite-based carbon; metal composite oxides such as LiₓFe₂O₃(0≤x≤1), LiₓWO₂(0≤x≤1), SnₓMe₁₋ₓMe'_{y}O_{z} (Me: Mn, Fe, Pb, Ge; Me': Al, B, P, Si, elements of groups 1, 2, and 3 of the periodic table, halogen; 0<x≤1; 1≤y≤3; 1≤z≤8); lithium metal; lithium alloy; silicon-based alloys; tin-based alloys; metal oxides such as SnO, SnO₂, PbO, PbO₂, Pb₂O₃, Pb₃O₄, Sb₂O₃, Sb₂O₄, Sb₂O₅, GeO, GeO₂, Bi₂O₃, Bi₂O₄, and Bi₂O₅; conductive polymers such as polyacetylene; Li-Co-Ni-based materials; titanium oxides.

The conductive material may include, for example, any one selected from the group consisting of graphite, carbon black, carbon fiber, or metal fiber, metal powder, conductive whisker, conductive metal oxide, carbon nanotube, activated carbon, and polyphenylene derivatives, or a mixture of two or more conductive materials. More specifically, the conductive material may be one selected from the group consisting of natural graphite, artificial graphite, super-p, acetylene black, Ketjen black, channel black, furnace black, lamp black, thermal black, denka black, aluminum powder, nickel powder, zinc oxide, potassium titanate, and titanium oxide, or a mixture of two or more of these conductive materials.

The current collector is not particularly limited as long as the current collector has high conductivity without causing a chemical change in the battery, and for example, stainless steel, copper, aluminum, nickel, titanium, calcined carbon, or surface treatment material of aluminum or stainless steel with carbon, nickel, titanium, silver, etc., may be used.

As the binder resin, a polymer commonly used for electrodes in the art may be used. Non-limiting examples of such binder resins include polyvinylidene fluoride-co-hexafluoropropylene, polyvinylidene fluoride-co-trichlorethylene, polymethylmethacrylate, polyethylhexyl acrylate, polybutylacrylate, polyacrylonitrile, polyvinylpyrrolidone, polyvinylacetate, polyethylene-co-vinyl acetate, polyethylene oxide, polyarylate, cellulose acetate, cellulose acetate butyrate, cellulose acetate propionate, cyanoethylpullulan, cyanoethylpolyvinylalcohol, cyanoethylcellulose, cyanoethylsucrose, pullulan, and carboxyl methyl cellulose and the like, but are not limited thereto.

The electrode assemblies prepared as above can be mounted in a suitable case, and electrolyte can be injected therein to make a battery.

The electrolyte solution comprises a salt having the same structure as A⁺B⁻, and A⁺ includes ions formed of alkali metal cations such as Li⁺, Na⁺, K⁺, or a combination thereof, and B⁻includes ions formed of anion, such as PF₆⁻, BF₄⁻, Cl-, Br⁻, I⁻, ClO₄⁻, AsF₆⁻, CH₃CO₂⁻, CF₃SO₃⁻, N(CF₃SO₂)₂⁻, C(CF₂SO₂)₃⁻, or a combination thereof. In the electrolyte solution, the salt may be dissolved or dissociated in an organic solvent consisting of propylene carbonate (PC), ethylene carbonate (EC), diethyl carbonate (DEC), dimethyl carbonate (DMC), dipropyl carbonate (DPC), dimethyl sulfoxide, acetonitrile, dimethoxyethane, diethoxyethane, tetrahydrofuran , N-methyl-2-pyrrolidone (NMP), ethylmethyl carbonate (EMC), gamma butyrolactone (γ-butyrolactone),or a combination thereof, but is not limited thereto.

A battery module including a battery including the electrode assembly as a unit cell, a battery pack including the battery module, and a device including the battery pack as a power source may be provided. Specific examples of the device include a power tool powered by a battery motor; electric vehicles, including electric vehicles (EVs), hybrid electric vehicles (HEVs), plug-in hybrid electric vehicles (PHEVs), and the like; electric two-wheeled vehicles, including electric bicycles (E-bikes) and electric scooters (E-scooter); electric golf carts; and a power storage system, but is not limited thereto.

Hereinafter, examples will be given to describe the present disclosure in detail. However, the embodiments according to the present disclosure may be modified in various other forms, and the scope of the present disclosure should not be construed as being limited to the embodiments described below. The embodiments of the present disclosure are provided to more completely explain the present disclosure to those of ordinary skilled in the art.

### [Example 1]

As a porous polyolefin polymer substrate, Toray's 8 µm thick wet polyethylene separator with a porosity of 45% was used.

The polyethylene separator had a porosity of 45%, an average pore diameter of 25 nm, and a puncture strength of 250 gf.

Meanwhile, the slurry was prepared as follows.

20 g of Al₂O₃ (Sumitomo, D50 500 nm), 0.89 g of polyacrylic acid dispersant solution (42% solids), and 20 g of 0.5 mm beads for dispersion were added in 30.5 g of dispersion medium in which water and ethanol is mixed with a ratio 95:5 and stirred with a paint shaker for 2 hours to prepare the inorganic particle dispersion solution. Then, 10.9 g of a particulate binder polymer (particle diameter 350 nm, Tg 40°C) of a copolymer of methyl methacrylate and ethyl hexyl acrylate dispersed in water at 41% by weight as a binder component and 0.17 g of a surfactant (FC4430, 3M, 90% solids) were added to the inorganic particle dispersion solution and shaken to prepare a coating slurry (ratio of inorganic material: binder polymer particles + additives in the slurry solids = 80:20).

The coating slurry was filtered through 200 mesh and coated on one side of a polyethylene porous film using a bar coater and dried in a dryer. The other side of the film was coated once more under the same conditions to prepare a double-sided coated separator. The coating thickness was controlled at 5 µm based on the total thickness of the double-sided coating.

### [Example 2]

The inorganic particle dispersion solution was prepared in the same manner as Example 1, except that 10 g of a particulate binder polymer of a copolymer of methylmethacrylate and ethylhexyl acrylate (particle diameter 350 nm, Tg 40°C) dispersed in water at 41% by weight as a binder component and 0.94 g of an acrylic resin (Toyochem, CSB130, particle diameter 150 nm, Tg - 30°C) dispersed in water at 40% by weight were added.

### [Comparative Example 1]

20g of Al₂O₃ (Sumitomo, D50 500nm), 0.38g of Cyanoethyl PVA, and 20g of 0.5mm beads for dispersion were added to 90g of acetone and stirred for 2 hours in a paint shaker to prepare an inorganic particle dispersion solution. Subsequently, 30.75 g of PVDF-HFP (molecular weight 400,000, HFP 8w%) and 15.5 g of PVDF-HFP (molecular weight 500,000, HFP 15w%) dissolved in acetone at a concentration of 10% by weight each, were added to the inorganic particle dispersion solution and stirred with a paint shaker for 2 hours to prepare the coating slurry (Ratio of inorganic material: binder components + additives in slurry solids = 80:20).

The coating slurry was filtered through 200 mesh and then dip-coated at 23°C, RH45%, to coat both sides of the polyethylene porous film and dried with a dryer. The coating thickness was controlled at 5 µm based on the total thickness of the double-sided coating.

### [Comparative Example 2]

The wet type polyethylene separator was prepared in the same manner as in Comparative Example 1, except that a separator with an average pore diameter of 40 nm and a thickness of 8 µm was used.

### [Comparative Example 3]

The wet type polyethylene separator was prepared in the same manner as in Comparative Example 1, except that a separator with an average pore diameter of 40 nm and a thickness of 9 µm was used.

### [Comparative Example 4]

The wet type polyethylene separator was prepared by the same manner as Example 1, except that a separator with an average pore diameter of 40 nm and a thickness of 8 µm was used.

### [Comparative Example 5]

The wet type polyethylene separator was prepared by the same manner as Example 1, except that a separator having an average pore diameter of 40 nm and a thickness of 8 µm was used as a separator, and 9.09 g of a particulate binder polymer of a copolymer of methylmethacrylate and ethylhexylacrylate (particle diameter 350 nm, Tg 40°C) dispersed in water at 41% by weight as a binder component and 1.88 g of an acrylic resin (Toyochem, CSB130, particle diameter 150 nm, Tg -30°C) dispersed in water at 40% by weight were added.

### [Measurement of the average pore diameter of pores]

An average pore diameter of pores was measured according to the pore size distribution using a capillary flow porometer method(CFP method).

### [Measurement of the amount of the binder polymer component remaining in the porous polyolefin polymer substrate after the porous coating layer is peeled off by attaching the porous coating layer with 3M scotch tape and then detaching it for three times]

The coated porous separators of Examples and Comparative Examples were cut into 8 cm x 8 cm, and a 5 mm edge portion was fixed to a glass plate with tape to prevent wrinkles on the separator. After that, several sheets were attached using 3M tape (810D) to cover the entire surface of the porous coating layer, maintained for 5 seconds, and then the tape was peeled off. After peeling the coating layer using 3M tape twice more (3 times in total), the separator with the peeled coating layer on one side was cut into 7cm x 7cm pieces. Subsequently, the separator was turned over onto a glass plate to expose the coating layer on the opposite side of the peeled off side, and the 5 mm edge was fixed with tape. Again, the coating layer was peeled off three times using 3M tape (810D). Finally, the separator with the coating layer removed on both sides was cut into 5 cm x 5 cm pieces and weighed. The same substrate used for coating was cut into 5 cm x 5 cm, and the amount of binder content per square meter was calculated by comparing with the value measured by weight.

### [Measurement of dielectric breakdown voltage after compression]

Release PET film cut into 10x10 cm was laminated on top and bottom of the separator cut into 5X5 cm. At this time, the releasing surface of the release PET film was brought into contact with the separator. A compressed separator sample was prepared by hot pressing the separator laminated with PET film for 10 seconds at a temperature of 70°C and a pressure of 5 MPa.

Place the prepared coated separator sample between aluminum jigs (upper jig diameter 30 mm, lower jig 50 x 100 mm) and measure the voltage at which the fail condition (>0.5 mA, 3 sec) occurs with a Hi-pot tester. At this time, the measurement conditions were set to DC, current 0.5 mA, voltage boosts 100V/s (up to 3kV).

### [Measurement of capacity retention rate after 25°C, 1C/1C, 200 cycles]

### Preparation of a cathode

A slurry for a cathode active material layer having a concentration of 50 % by weight except for water was prepared by mixing a cathode active material (LiNi_{0.8}Mn_{0.1}Co_{0.1}O₂), a conductive material (carbon black), a dispersing agent, and a binder resin (a mixture of PVDF-HFP and PVDF) with water in a weight ratio of 97.5: 0.7: 0.14: 1.66. Next, the slurry was applied on the surface of an aluminum thin film (thickness: 10 um) and dried to prepare a cathode having a cathode active material layer (thickness: 120 µm).

### Preparation of an anode

A slurry for a cathode active material layer having a concentration of 50 % by weight except for water was prepared by mixing a graphite (natural graphite and artificial graphite blend), a conductive material (carbon black), a dispersing agent, and a binder resin (a mixture of PVDF-HFP and PVDF) with water in a weight ratio of 97.5: 0.7: 0.14: 1.66. Next, the slurry was coated on the surface of a copper thin film (thickness: 10 µm) and dried to prepare an anode having an anode active material layer (thickness: 120 µm).

### Lamination process

An electrode assembly was obtained by stacking the separators of Examples and Comparative Examples between the prepared anode and the cathode and performing a lamination process. The lamination process was performed for 10 seconds at 70°C with 5.2 MPa using a hot press.

### Electrolyte injection

A mono cell was manufactured from the electrode assembly prepared according to the lamination process, and an electrolyte solution in which 1 M LiPF₆ was dissolved in ethylene carbonate/ ethylmethyl carbonate = 3:7 (volume ratio) was injected into the mono cell to manufacture a lithium secondary battery.

For the battery prepared by the above-described method, charge and discharge were repeated at 25°C at a rate of 1C, respectively, in the range of 2.5 to 4.25 V, and the ratio of discharge capacities after 200 cycles was derived by calculation.

**[Table 1]**

| | Thicknes s of polyolef in polymer substrat e (µm) | Average pore diameter of substrate (nm) | Dielectri c breakdown voltage after compressi on (kV) | Amount of remaining binder after peeling 3M tape 3 times (g/ m²) | Capacity retention rate (%) | Remarks |
|---|---|---|---|---|---|---|
| Exampl e 1 | 8 | 25 | 1.83 | 0.12 | 90 | |
| Exampl e 2 | 8 | 25 | 1.87 | 0.42 | 86 | |
| Compar ative Exampl e 1 | 8 | 25 | 1.69 | 1.12 | 68 | Life span inferior |
| Compar ative Exampl e 2 | 8 | 40 | 1.42 | 1.25 | 79 | Insulation inferior |
| Compar | 9 | 40 | 1.81 | 1.47 | 86 | Thick |
| ative Exampl e 3 | | | | | | polymer substrate (thin film X) |
| Compar ative Exampl e 4 | 8 | 40 | 1.35 | 0.72 | 87 | Insulation inferiority |
| Compar ative Exampl e 5 | 8 | 40 | 1.29 | 1.02 | 65 | Insulation inferior, life span inferior |

## Claims

1. A method for manufacturing a separator for a lithium secondary battery, the method comprising:
(S1) preparing a slurry comprising binder polymer particles and inorganic particles dispersed in an aqueous dispersion medium; and
(S2) forming a porous coating layer on at least one surface of a porous polyolefin polymer substrate having a plurality of pores by applying and drying the slurry on the at least one surface, wherein
the porous polyolefin polymer substrate has a thickness of 9 µm or less,
the porous polyolefin polymer substrate has an average pore diameter of 30 nm or less, and
the binder polymer is present in an amount of 0.5 g/m² or less in the porous polyolefin polymer substrate after the porous coating layer is peeled off by a method of attaching and detaching 3M Scotch tape three times.

2. The method of claim 1, wherein the average pore diameter of the porous polyolefin polymer substrate is 27 nm or less, and
the binder polymer is present in an amount of 0.45 g/m² or less in the porous polyolefin polymer substrate after the porous coating layer is peeled off by a method of attaching and detaching 3M Scotch tape three times.

3. The method of claim 1, wherein the porous polyolefin polymer substrate has an average pore diameter of 25 nm or less, and
the binder polymer is present in an amount of 0.42 g/m² or less in the porous polyolefin polymer substrate after the porous coating layer is peeled off by a method of attaching and detaching 3M Scotch tape three times.

4. The method of claim 1, wherein the slurry further comprises a non-particulate binder polymer.

5. The method of claim 4, wherein the non-particulate binder polymer is 10% by weight or less with respect to the total weight of the binder polymer.

6. The method of claim 1, wherein the binder polymer particles have an average particle diameter in a range of 50 to 1000 nm.

7. The method of claim 1, wherein the binder polymer particles are made of one or more polymers selected from the group consisting of polyvinyl fluoride-based polymers, acrylic polymers, vinyl-based polymers, and rubber-based polymers.

8. A separator for a lithium secondary battery, the separator comprising:
a porous polyolefin polymer substrate having a plurality of pores; and
a porous coating layer formed on at least one surface of the porous polyolefin polymer substrate, the porous coating layer comprising a binder polymer and inorganic particles,
wherein the porous polyolefin polymer substrate has a thickness of 9 µm or less,
the porous polyolefin polymer substrate has an average pore diameter of 30 nm or less,
the binder polymer comprises a particulate binder polymer, and
the binder polymer is present in an amount of 0.5 g/m² or less in the porous polyolefin polymer substrate after the porous coating layer is peeled off by a method of attaching and detaching 3M Scotch tape three times.

9. The separator of claim 8, wherein the porous polyolefin polymer substrate has an average pore diameter of 27 nm or less, and
the binder polymer is present in an amount of 0.45 g/m² or less in the porous polyolefin polymer substrate after the porous coating layer is peeled off by a method of attaching and detaching 3M Scotch tape three times.

10. The separator of claim 8, wherein the porous polyolefin polymer substrate has an average pore diameter of 25 nm or less, and
the binder polymer is present in an amount of 0.42 g/m² or less in the porous polyolefin polymer substrate after the porous coating layer is peeled off by a method of attaching and detaching 3M Scotch tape three times.

11. The separator of claim 8, wherein the binder polymer further comprises a non-particulate binder polymer.

12. The separator of claim 11, wherein the non-particulate binder polymer is an acrylic polymer having a glass transition temperature Tg of 0°C or less.

13. The separator of claim 8, wherein the non-particulate binder polymer is 10% by weight or less with respect to the total weight of the binder polymer.

14. The separator of claim 8, wherein the binder polymer particles have an average particle size in a range of 50 to 1000 nm.

15. The separator of claim 8, wherein the binder polymer particles are made of one or more polymers selected from the group consisting of polyvinyl fluoride-based polymers, acrylic polymers, vinyl-based polymers, and rubber-based polymers.

16. The separator of claim 8, wherein the binder polymer particles are acrylic polymer having a glass transition temperature Tg of 20°C or higher.

17. A lithium secondary battery equipped with an electrode assembly comprising a cathode, an anode, and a separator interposed between the cathode and the anode, wherein
the separator is a separator in any one of claims 8 to 16.
